# EUROPEAN PATENT APPLICATION

(11) **EP 3 832 612 A1**
(43) Date of publication of application: **09.06.2021**
(21) Application number: 20195376.7
(22) Date of filing: 09.09.2020
(51) Int. Cl.: G07G 1/00, G06Q 20/20, G06Q 20/32

(54) **COMMODITY SALES PROCESSING SYSTEM**

(30) Priority: 02.12.2019 JP 2019217987
(71) Applicant: Toshiba TEC Kabushiki Kaisha, Tokyo 141-8562 (JP)
(72) Inventor: ICHIKAWA, Takashi, Shinagawa-ku, Tokyo 141-8562 (JP)
(74) Representative: Bandpay & Greuter

(57) **Abstract**

A commodity sales processing system in an embodiment includes a first server, configured to connect to a customer information terminal via a first network, and a second server, configured to connect to a store code reading apparatus. The first server associates a first unique code for the customer information terminal with a second unique code for the store code reading apparatus. The second server registers products in a sales transaction associated with the second unique code. The products are identified by a commodity code read by the store code reading apparatus and then received by the second server via the second network. The first server is configured to transmit, via the first network, product information for the products registered in the sales transaction to the customer information terminal associated with the first unique code.

## Description

### FIELD

Embodiments described herein relate generally to a commodity sales processing system.

### BACKGROUND

In recent years, a commodity sales processing system has been proposed that allows a consumer to register the items for purchase by himself or herself while shopping at retail stores such as a supermarket or a convenience store. As an example such a commodity sales processing system, there is a system using a cart-mounted terminal. The cart-mounted terminal includes a product scanner and a display device attached to a shopping cart. In the system of this type, a consumer uses the scanner to read barcodes on commodities being purchased. Then, barcode data is transmitted from the cart terminal to a store server or the like via a wireless LAN (Local Area Network). The server performs registration processing for the purchased commodities based on the barcode data and transmits registration data indicating a result of the registration processing to the cart terminal for display. The cart terminal causes the display device to display a registration screen based on the registration data. In this way, the consumer can confirm from the registration screen that the commodities are correctly registered.

As another example of a commodity sales processing system, there is a system using a hand-held information terminal such as a smartphone owned by the consumer/shopper. In the system of this type, the consumer installs a dedicated application program in the information terminal in advance. The consumer then images, with a camera of the information terminal, barcodes on the commodities being purchased. Then, barcode data is transmitted from the information terminal to a store server or the like via a wireless LAN. The server-side operation is substantially the same in this case as in the system using the cart-mounted terminal. Therefore, a registration screen is displayed on a display device of the information terminal, and the consumer can confirm that the commodities are correctly registered.

The cart-based system needs a dedicated cart terminal for each of shopping carts at the store. On the other hand, in the system using the hand-held information terminal owned by the consumer, the store does not need to prepare and provide any terminal, which generally requires less upfront investment than the system using the cart terminals. However, a camera of the smartphone is not primarily designed to read a barcode on a commodity. Furthermore, the consumer must hold the information terminal with at least one hand while performing barcode reading operation. Accordingly, for example, the consumer may have trouble in reading a barcode of a larger commodity that the consumer may be unable to easily hold with the other hand while reading the barcode. In this way, the system using the hand-held information terminal provided by the consumer is somewhat poorer in user convenience than the system using the cart terminals.

### DESCRIPTION OF THE DRAWINGS

FIG. 1 is a block diagram illustrating a schematic configuration of a commodity sales processing system according to an embodiment.
FIG. 2 is a perspective view illustrating an example of a shopping cart including a scanner module.
FIG. 3 is a block diagram of a scanner module and a schematic depiction of certain functions of a scanner module.
FIG. 4 is a block diagram of an information terminal.
FIG. 5 is a block diagram of a cooperation server.
FIG. 6 is a schematic diagram illustrating aspects of data structure of a terminal cooperation table.
FIG. 7 is a block diagram of a store server;
FIG. 8 is a schematic diagram illustrating a data structure of a scanner management table.
FIG. 9 is a block diagram of a virtual POS server.
FIG. 10 is a schematic diagram illustrating a data structure of a transaction file.
FIG. 11 is a flowchart of information processing executed by a processor of an information terminal.
FIG. 12 is a flowchart of information processing executed by a processor of an information terminal.
FIGs. 13-17 are flowcharts of information processing executed by a processor of a cooperation server.
FIG. 18 is a flowchart of information processing executed by a processor of a store server.
FIG. 19 is a flowchart of information processing executed by a processor of a store server.
FIG. 20 is a flowchart of information processing executed by a processor of a store server.
FIGs. 21-23 are flowcharts of information processing executed by a processor of a virtual POS server.
FIG. 24 depicts a display example of a code symbol indicating a cooperation ID.
FIG. 25 depicts a display example of a shopping start screen.
FIG. 26 depicts a display example of a registration screen.
FIG. 27 depicts a display example of an accounting screen.
FIG. 28 is a block diagram of a scanner module in a second embodiment and schematic depiction of certain function aspects of a scanner module.
FIG. 29 is a schematic depiction of aspects of a third embodiment.
FIG. 30 is a flowchart of information processing executed by a processor of an information terminal in a third embodiment.
FIG. 31 is a flowchart of cooperation notification command reception processing executed by a processor of a cooperation server in a third embodiment.

### DETAILED DESCRIPTION

According to an embodiment, a commodity sales processing system comprises a first server, configured to connect to a customer information terminal via a first network, and a second server, configured to connect to a store code reading apparatus. The first server is configured to associate a first unique code for the customer information terminal with a second unique code for the store code reading apparatus. The second server is configured to register a product in a sales transaction associated with the second unique code, the product being identified by a commodity code received by the second server from the store code reading apparatus via the second network. The first server is configured to transmit, via the first network, product information for the product registered in the sales transaction to the customer information terminal associated with the first unique code.

Preferably, the first server associates the first unique code and the second unique code based on correlating data transmitted, via the second network, to the second server from the store code reading apparatus.

Preferably, the correlating data is generated by the store code reading apparatus by reading the first unique code from a display screen of the customer information terminal.

Preferably, the first server associates the first unique code and the second unique code according to a wireless communication from the customer information terminal.

Preferably, the first server receives the second unique code in conjunction with the first unique code from the customer information terminal via the first network.

Preferably, the second unique code is provided to the customer information terminal by a code symbol representing the second unique code that is physically attached to the store code reading apparatus.

Preferably, the first server is further configured to release the association of the first unique code and the second unique code according to settlement of the sales transaction associated with the second unique code.

Preferably, the store code reading apparatus is mounted on a shopping cart.

Preferably, the shopping cart includes a stand for the customer information terminal.

In another exemplary embodiment, there is also provided a commodity sales processing method, comprising: associating, in a first server, a first unique code for a customer information terminal with a second unique code for a store code reading apparatus; registering, in a second server, a product in a sales transaction associated with the second unique code, the product being identified by a commodity code received by the second server from the store code reading apparatus via the second network; and transmitting, via the first network, product information for the product registered in the sales transaction to the customer information terminal associated with the first unique code.

Preferably, the customer information terminal and the store code reading apparatus is an optical scanner mounted on a shopping cart.

Preferably, the first server associates the first unique code and the second unique code based on correlating data transmitted, via the second network, to the second server from the store code reading apparatus.

Preferably, the first server receives the second unique code in conjunction with the first unique code from the customer information terminal via the first network.

Preferably, the second unique code is provided to the customer information terminal by a code symbol representing the second unique code that is physically attached to the store code reading apparatus.

Preferably, the method further comprises releasing the association of the first unique code and the second unique code in the first server according to settlement of the sales transaction associated with the second unique code.

Example embodiments of a commodity sales processing system are explained below with reference to the drawings. The commodity sales processing system in these examples are utilized in retail stores, such as a supermarket or a convenience store, and permit a customer to register commodities being purchased while shopping (that is, moving about the sales floor or the like of the store) rather than at a checkout counter or the like.

### [First Embodiment]

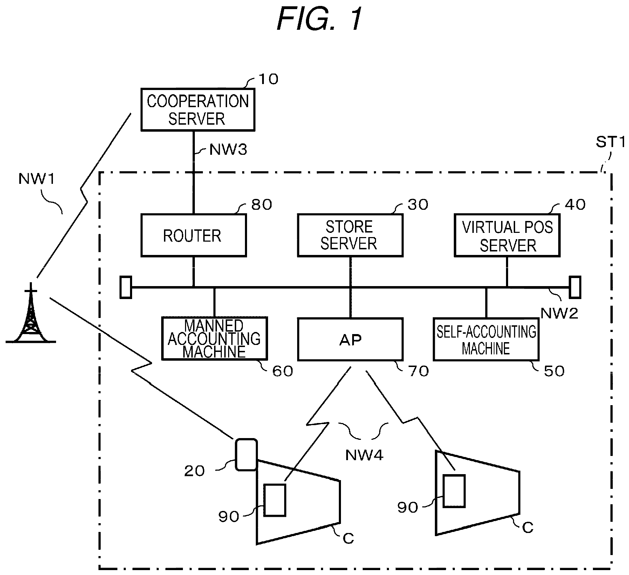

FIG. 1 is a block diagram illustrating a schematic configuration of a commodity sales processing system according to an embodiment. The commodity sales processing system includes a cooperation server 10. The cooperation server 10 in this example is a cloud computing server that provides a service to an information terminal 20 through a wide area network NW1 such as the Internet. The information terminal 20 is owned by a customer (also referred to as a consumer) who does shopping in a store ST1. For example, a terminal adapted for connection to the Internet, such as a smartphone or a tablet terminal, can be used as the information terminal 20.

The commodity sale processing system in this example also includes devices such as a store server 30, a virtual POS (Point Of Sales) server 40, a self-service accounting machine 50 (also referred to as a settlement kiosk, a transaction payment machine, or the like), a manned accounting machine 60 (also referred to as sales register, cash register, cashier stand, or the like), a router 80, and an access point 70. These devices are provided in the store ST1. An intra-store network NW2 such as a LAN is laid out in the store ST1. All of the devices are connected to the intra-store network NW2.

The store server 30 is a server computer for supporting an entire store business. The virtual POS server 40 is a server computer for providing, using a virtual POS application program, an environment in which a plurality of POS terminals are virtually operating. In the following explanation, the virtual POS application program is abbreviated as virtual POS application.

The self-service accounting machine 50 is an accounting machine that enables a customer to perform, by himself or herself, settlement processing (e.g., payment processing) for the commodities purchased by the customer. The manned accounting machine 60 is an accounting machine that enables a store clerk to perform the settlement processing for the commodities. As the self-service accounting machine 50, a well-known self-service-type POS terminal or a semi-self-service-type checkout machine can be applied. As the manned accounting machine 60, a well-known POS terminal or an electronic cash register can be applied.

The cooperation server 10 is connected to the router 80 via a dedicated communication network NW3. The router 80 is a network device that enables data communication between the devices connected to the intra-store network NW2 and the cooperation server 10.

The access point 70 receives a connection request from a wireless communication device present in the store ST1 and connects the wireless communication devices to the intra-store network NW4 by wireless radio signals between the access point 70 and the wireless communication device. Scanner modules 90 are present in the store ST1 and are wireless communication devices that can connect to the access point 70. The scanner modules 90 are provided in shopping carts C. In the following explanation, the shopping carts C are referred to as carts C for simplicity.

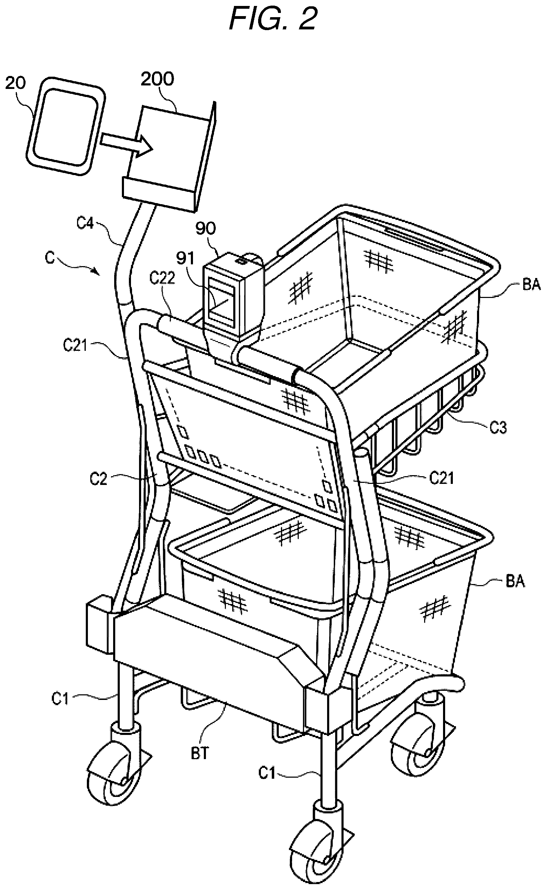

FIG. 2 is a perspective view illustrating an example of the cart C including the scanner module 90. The cart C includes a caster section C1 for movement, a handle frame section C2, and a basket section C3. The caster section C1 includes four wheels for smoothly moving the cart C on a floor surface. The handle frame section C2 includes a pair of vertical frames C21, C21 erected on a rear wheel side of the caster section C1 and a handlebar C22 that couples upper ends of the vertical frames C21, C21. The basket section C3 is present forward from a halfway part of the handle frame section C2. In the cart C, a shopping basket BA provided in the store can be placed on the basket section C3 and a lower part of the cart C.

In the cart C having such a configuration, the scanner module 90 is at an approximate midpoint of the handlebar C22. The scanner module 90 is attached to the handlebar C22 such that a reading window 91 is facing towards a customer holding the handlebar C22 and pushing the cart C. A battery BT is attached to the lower end side of the handle frame section C2 over the vertical frames C21, C21. The battery BT functions as a power supply for the scanner module 90.

A pole C4 is attached to one vertical frame C21 of the cart C. A placing stand 200 for the information terminal 20 is provided at the distal end of the pole C4. The consumer using the cart C can place the information terminal 20 on the placing stand 200 and do shopping.

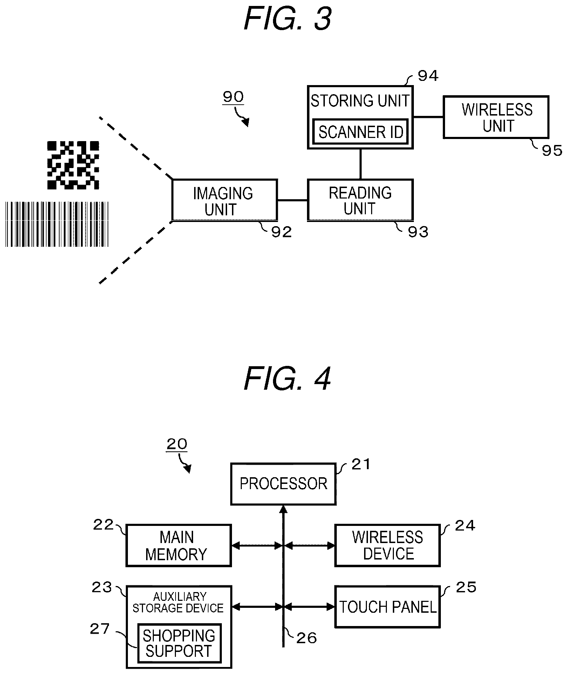

FIG. 3 is a block diagram of the scanner module 90. The scanner module 90 includes an imaging unit 92, a reading unit 93, a storing unit 94, and a wireless unit 95. The imaging unit 92 captures an image including a barcode or a two-dimensional code through the reading window 91. The reading unit 93 reads data of the barcode or the two-dimensional code from the image captured by the imaging unit 92. The storing unit 94 stores the data read by the reading unit 93. The storing unit 94 stores a scanner ID in a non-volatile manner. The scanner ID is a unique identification code set for each of the scanner modules 90 at the store in order to individually identify each of the scanner modules 90. The wireless unit 95 transmits, on condition that the wireless unit 95 is connected to the access point 70, the data of the barcode or the two-dimensional code together with the scanner ID according to a predetermined wireless communication scheme.

FIG. 4 is a block diagram illustrating a configuration of the information terminal 20. The information terminal 20 includes a processor 21, a main memory 22, an auxiliary storage device 23, a wireless device 24, a touch panel 25, and a system transmission line 26. The system transmission line 26 includes an address bus, a data bus, and a control signal line. In the information terminal 20, the processor 21, the main memory 22, the auxiliary storage device 23, the wireless device 24, and the touch panel 25 are connected to the system transmission line 26. In the information terminal 20, a computer is configured by the processor 21, the main memory 22, and the auxiliary storage device 23 and the system transmission line 26 that connects these devices.

The processor 21 controls the units in order to realize various function of the information terminal 20 according to an operating system or application programs. The processor 21 is, for example, a CPU (Central Processing Unit).

The main memory 22 includes a nonvolatile memory region and a volatile memory region. The main memory 22 stores the operating system or the application programs in the nonvolatile memory region. The main memory 22 stores, in the volatile memory region, data necessary for the processor 21 in executing processing for controlling the units. The main memory 22 sometimes stores the data in the nonvolatile memory region. The main memory 22 uses the volatile memory region as a work area in which data is rewritten as appropriate by the processor 21. The nonvolatile memory region is, for example, a ROM (Read Only Memory). The volatile memory region is, for example, a RAM (Random Access Memory).

The auxiliary storage device 23 is, for example, an EEPROM (Electric Erasable Programmable Read-Only Memory), a HDD (Hard Disc Drive), or an SSD (Solid State Drive). The auxiliary storage device 23 stores data used by the processor 21 in performing various kinds of processing operations, data created by the processing in the processor 21, or the like. The auxiliary storage device 23 sometimes stores the application programs.

The application programs stored in the auxiliary storage device 23 include a shopping supporting program 27. The consumer uses the shopping supporting program 27 when doing shopping in the store ST1. A method of installing the shopping supporting program 27 in the auxiliary storage device 23 is not particularly limited. A control program can be recorded in a removable recording medium or distributed by communication via a network to be installed in the auxiliary storage device 23. A form of the recording medium may be any form if the recording medium can store programs and is readable by a device like a CD-ROM, a memory card, or the like. The shopping supporting program 27 may be installed in the main memory 22 rather than in the auxiliary storage device 23.

The wireless device 24 is a device for performing wireless communication of data according to a predetermined wireless communication protocol between the wireless device 24 and the cooperation server 10 connected to the wireless device 24 via the wide area network NW1.

The touch panel 25 is a device functioning as both of an input device and a display device of the information terminal 20. The touch panel 25 displays various images. The touch panel 25 detects a touch position on a displayed image and outputs information concerning the touch position to the processor 21.

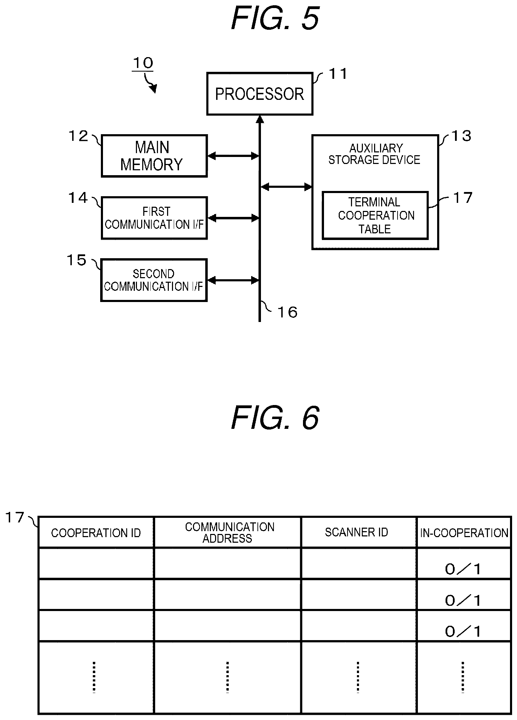

FIG. 5 is a block diagram illustrating a configuration of the cooperation server 10. The cooperation server 10 includes a processor 11, a main memory 12, an auxiliary storage device 13, a first communication interface 14, a second communication interface 15, and a system transmission line 16. The system transmission line 16 includes an address bus, a data bus, and a control signal line. In the cooperation server 10, the processor 11, the main memory 12, the auxiliary storage device 13, the first communication interface 14, and the second communication interface 15 are connected to the system transmission line 16. In the cooperation server 10, a computer is configured by the processor 11, the main memory 12, and the auxiliary storage device 13 and the system transmission line 16 that connects these devices.

The processor 11 controls the units in order to realize various functions of the cooperation server 10 according to an operating system or application programs. The processor 11 is, for example, a CPU.

The main memory 12 includes a nonvolatile memory region and a volatile memory region. The main memory 12 stores the operating system or the application programs in the nonvolatile memory region. The main memory 12 stores, in the volatile memory region, data necessary for the processor 11 in executing processing for controlling the units. The main memory 12 sometimes stores the data in the nonvolatile memory region. The main memory 12 uses the volatile memory region as, for example, a work area in which data is rewritten as appropriate by the processor 11. The nonvolatile memory region is, for example, a ROM. The volatile memory region is, for example, a RAM.

The auxiliary storage device 13 can be, for example, an EEPROM, a HDD, an SSD, or the like. The auxiliary storage device 13 stores data used by the processor 11 in performing various kinds of processing, data created by the processing in the processor 11, or the like. The auxiliary storage device 13 sometimes stores the application programs.

The application programs stored in the main memory 12 or the auxiliary storage device 13 include a control program described concerning information processing executed by the cooperation server 10. As in the case of the shopping supporting program 27, a method of installing the control program in the main memory 12 or the auxiliary storage device 13 is not particularly limited.

The first communication interface 14 is an interface circuit for performing wireless communication of data according to a predetermined wireless communication protocol between the first communication interface 14 and the information terminal 20 connected to the first communication interface 14 via the wide area network NW1.

The second communication interface 15 is an interface circuit for performing transmission and reception of data according to a predetermined communication protocol between the second communication interface 15 and the router 80 connected to the second communication interface 15 via the communication network NW3.

The cooperation server 10 having such a configuration stores a terminal cooperation table 17 in the auxiliary storage device 13. A storage destination of the terminal cooperation table 17 is not limited to the auxiliary storage device 13. The terminal cooperation table 17 may be stored in the volatile memory region of the main memory 12.

FIG. 6 is a schematic diagram illustrating a main data structure of the terminal cooperation table 17. As illustrated in FIG. 6, the terminal cooperation table 17 includes data fields for describing, in the same row, a cooperation ID, a communication address, a scanner ID, and an in-cooperation flag related to one another.

The cooperation ID is a unique code set for each of information terminals 20 in order to individually identify the various information terminals 20 owned by different consumers. The cooperation ID is automatically generated in the cooperation server 10.

The communication address is a communication address set in the information terminal 20 identified by the cooperation ID in the same row. For example, an IP address is equivalent to the communication address in this context.

The scanner ID is a code for identifying the scanner module 90 that operates in cooperation with the information terminal 20 identified by the cooperation ID in the same row. Unique scanner IDs are set in advance in the scanner modules 90 respectively attached to the carts C.

The in-cooperation flag is one-bit data indicating whether a cooperation state of the information terminal 20 identified by the cooperation ID and the scanner module 90 identified by the scanner ID in the same row is established. In this embodiment, the in-cooperation flag at the time when the cooperation state is established is represented as "1" and the in-cooperation flag at the time when the cooperation state is not established is represented as "0".

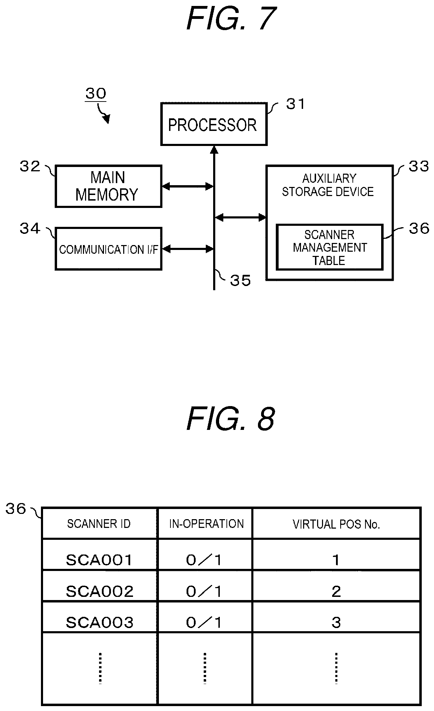

FIG. 7 is a block diagram illustrating a configuration of the store server 30. The store server 30 includes a processor 31, a main memory 32, an auxiliary storage device 33, a communication interface 34, and a system transmission line 35. Explanation about the processor 31, the main memory 32, the auxiliary storage device 33, and the system transmission line 35 is omitted because the explanation overlaps the explanation about the processor 11, the main memory 12, the auxiliary storage device 13, and the system transmission line 16 of the cooperation server 10.

The communication interface 34 is an interface circuit for performing data communication with devices connected to the communication interface 34 via the intra-store network NW2.

The store server 30 having such a configuration stores a scanner management table 36 in the auxiliary storage device 33. A storage destination of the scanner management table 36 is not limited to the auxiliary storage device 33. The scanner management table 36 may be stored in a volatile memory region of the main memory 32.

FIG. 8 is a schematic diagram illustrating a main data structure of the scanner management table 36. As illustrated in FIG. 8, the scanner management table 36 includes data fields for describing, in one row, a scanner ID, an in-operation flag, and a virtual POS No. related to one another. In the data field of the scanner ID, scanner IDs of the scanner modules 90 respectively attached to the carts C are described in advance.

In in-operation flag is one-bit data indicating whether the scanner module 90 identified by the scanner ID in the same row is in operation. In this embodiment, the in-operation flag indicating that the scanner module 90 is in operation is represented as "1" and the in-operation flag indicating that the scanner module 90 is not in operation is represented as "0".

The virtual POS No. is a serial number set for each of virtual POS applications in order to individually identify, in correlation with the scanner module 90 identified by the scanner ID in the same row, the virtual POS applications executed in the virtual POS server 40.

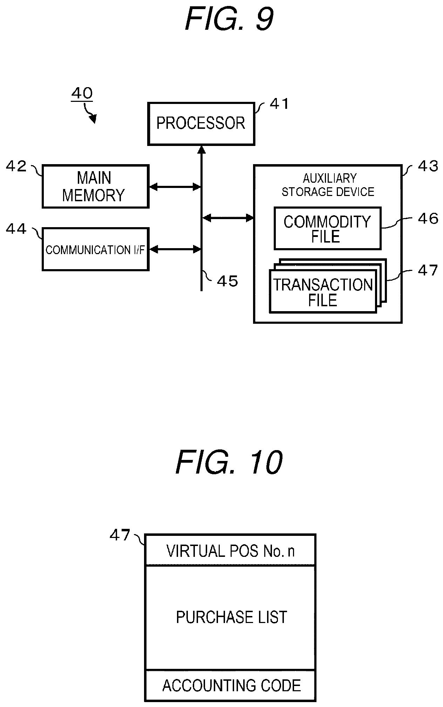

FIG. 9 is a block diagram illustrating a configuration of the virtual POS server 40. The virtual POS server 40 includes a processor 41, a main memory 42, an auxiliary storage device 43, a communication interface 44, and a system transmission line 45. Explanation about the processor 41, the main memory 42, the auxiliary storage device 43, the communication interface 44, and the system transmission line 45 is omitted because the explanation overlaps the explanation about the processor 31, the main memory 32, the auxiliary storage device 33, the communication interface 34, and the system transmission line 35 of the store server 30.

The virtual POS server 40 having such a configuration stores a commodity file 46 in the auxiliary storage device 43. The commodity file 46 is a data file describing, in correlation with a unique commodity ID set for each of commodities in order to respectively identify the commodities sold in the store ST1, commodity data such as a commodity name and a price of the commodity identified by the commodity ID.

The virtual POS server 40 stores a plurality of transaction files 47 in the auxiliary storage device 43. A storage destination of the commodity file 46 and the transaction files 47 is not limited to the auxiliary storage device 43. At least one of the commodity file 46 and the transaction files 47 may be stored in a volatile memory region of the main memory 42.

FIG. 10 is a schematic diagram illustrating a main data structure of one transaction file 47. As illustrated in FIG. 10, the transaction file 47 includes a virtual POS No. region, a purchase list region, and an accounting code region. In the virtual POS No. region, a number (No.) n of a virtual POS application to be executed is described in correlation with the transaction file 47. In the purchase list region, a commodity ID, a commodity name, a price, and the like of a commodity, sales of which is registered according to the virtual POS application having the number (No.) n, are described in a list format. In the accounting code region, an accounting code necessary for accounting of the commodity describe in the purchase list region is described. The accounting code is generated as appropriate in the store server 30.

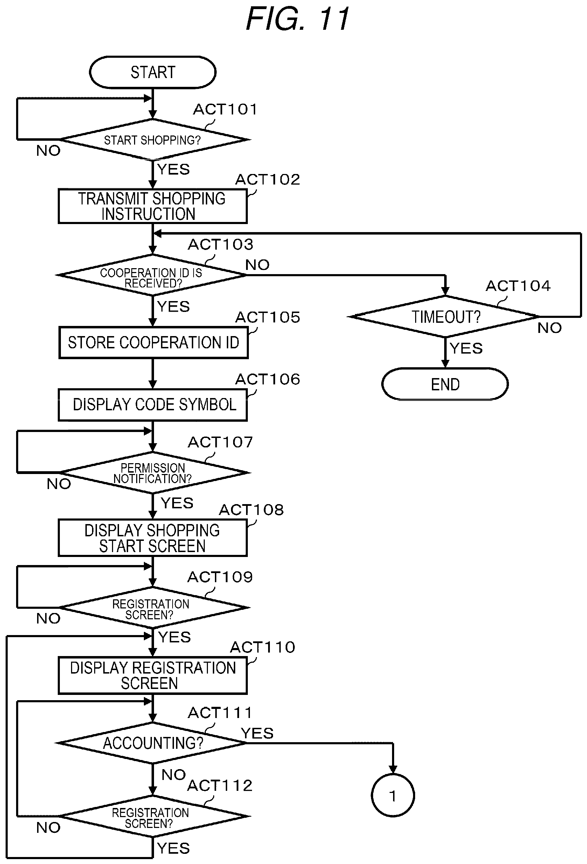

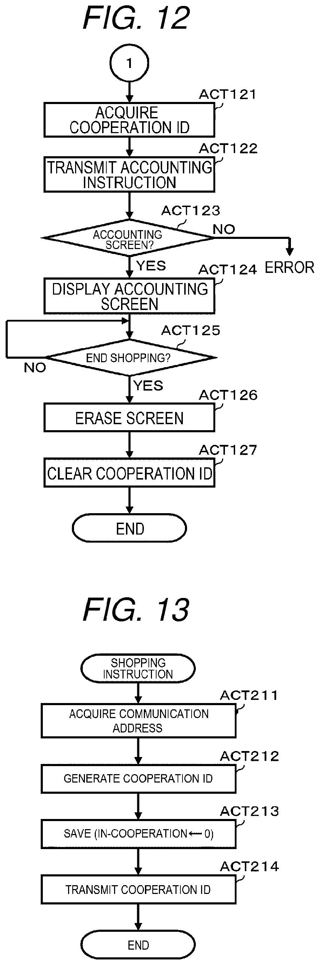

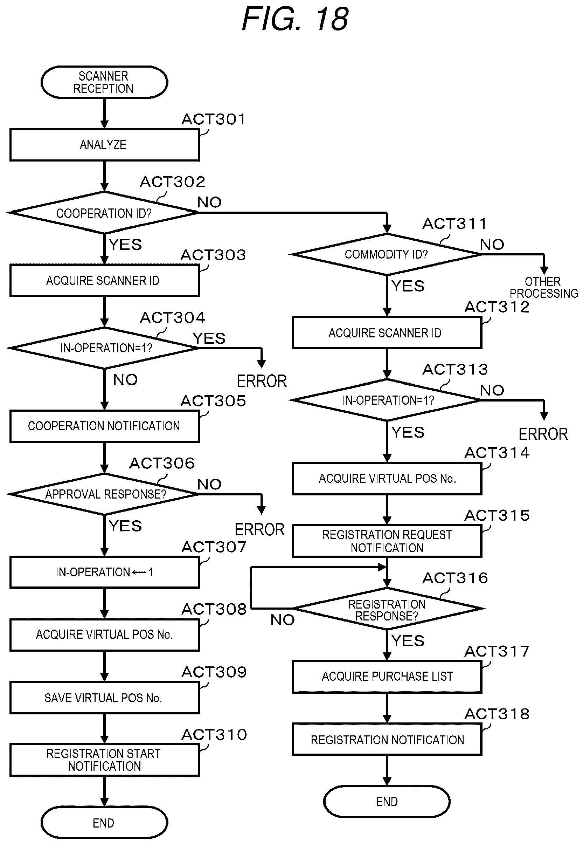

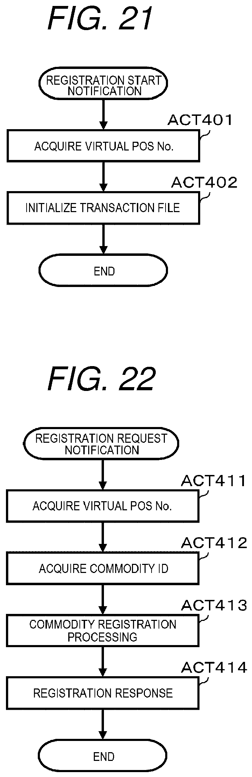

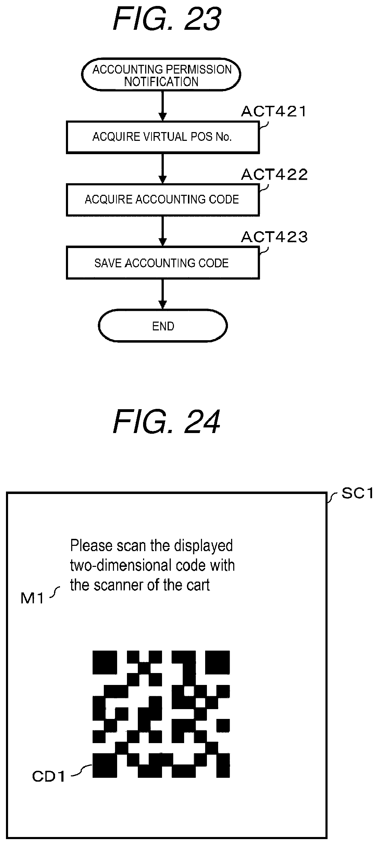

FIGS. 11 and 12 are flowcharts illustrating information processing executed by the processor 21 of the information terminal 20 according to the shopping supporting program 27. FIGS. 13 to 17 are flowcharts illustrating information processing executed by the processor 11 of the cooperation server 10. FIGS. 18 to 20 are flowcharts illustrating information processing executed by the processor 31 of the store server 30. FIGS. 21 to 23 are flowcharts illustrating information processing executed by the processor 41 of the virtual POS server 40. FIGS. 24 to 27 are schematic diagrams illustrating examples of various images displayed on the touch panel 25 of the information terminal 20. In the following explanation, the operation of the commodity sales processing system is explained with reference to these figures. The operation explained below is a non-limiting example. The procedures and the like of the operation are not particularly limited to those described so long as the same result as described can be obtained.

First, the consumer doing shopping in the store ST1 starts the shopping supporting program 27 installed in the information terminal 20. If the shopping supporting program 27 starts, the processor 21 of the information terminal 20 starts the information processing procedure illustrated in the flowcharts of FIGS. 11 and 12.

That is, in ACT 101, the processor 21 waits for a shopping start to be instructed. According to the start of the shopping supporting program 27, an initial screen is displayed on the touch panel 25 of the information terminal 20. A shopping start button is displayed on the initial screen. The consumer touches the shopping start button. If the shopping start button is selected (e.g., touched), the processor 21 recognizes that the shopping start is instructed. The processor 21 determines YES in ACT 101 and proceeds to ACT 102. In ACT 102, the processor 21 controls the wireless device 24 to transmit a shopping instruction command to the cooperation server 10. According to this control, the wireless device 24 wirelessly transmits the shopping instruction command. The shopping instruction command is received by the cooperation server 10 via the wide area network NW1. The shopping instruction command includes a communication address, for example, an IP address of the information terminal 20.

If the shopping instruction command is received via the first communication interface 14, the processor 11 of the cooperation server 10 starts the information processing procedure illustrated in the flowchart of FIG. 13. That is, in ACT 211, the processor 11 acquires a communication address of the information terminal 20 from the shopping instruction command. In ACT 212, the processor 11 generates a unique cooperation ID.

In ACT 213, the processor 11 saves the cooperation ID generated in ACT 212 and the communication address acquired in ACT 211 in the same row in the terminal cooperation table 17. The processor 11 sets the in-cooperation flag in the same row to "0". Data is not set in the scanner ID field in the same row at this point in time.

In ACT 214, the processor 11 controls the first communication interface 14 to transmit data of the cooperation ID generated in ACT 212 with the communication address acquired in ACT 211 set as a destination. According to this control, the data of the cooperation ID is transmitted from the first communication interface 14. The data is received by the wireless device 24 of the information terminal 20, in which the destination communication address is set, via the wide area network NW1.

Referring back to FIG. 11, in ACT 103, the processor 21 of the information terminal 20, which controls the transmission of the shopping instruction command, checks whether the data of the cooperation ID has been received. If the data of the cooperation ID is not received, the processor 21 determines NO in ACT 103 and proceeds to ACT 104. In ACT 104, the processor 21 checks whether an elapsed time from the transmission of the shopping instruction command exceeds a preset timeout time. The timeout time is, for example, 10 seconds. If the elapsed time does not yet exceed the timeout time, the processor 21 determines NO in ACT 104 and returns to ACT 103. In ACT 103 and ACT 104, the processor 21 waits for the data of the cooperation ID to be received or waits for the timeout time to elapse. If the timeout time elapses, the processor 21 determines YES in ACT 104 and ends the processing.

If the data of the cooperation ID is received before the timeout time elapses, the processor 21 determines YES in ACT 103 and proceeds to ACT 105. In ACT 105, the processor 21 stores the data of the cooperation ID. A storage destination of the data may be the volatile memory region of the main memory 22 or may be the auxiliary storage device 23. In ACT 106, the processor 21 causes the touch panel 25 to display a code symbol indicating the cooperation ID based on the stored data.

FIG. 24 is an example of a screen SC1 in which a code symbol CD1 indicating the cooperation ID is displayed on the touch panel 25. In this embodiment, the code symbol CD1 is displayed in a form of a two-dimensional code. The two-dimensional code is a code symbol readable by the scanner module 90. The screen SC1 includes a message M1 for informing the consumer that the consumer scans the code symbol CD1 with the scanner module 90 of the cart C. Incidentally, the code symbol CD1 does not always have to be the form of the two-dimensional code. The code symbol CD1 may be, for example, barcodes in two stages or may be barcodes in two or more stages if the barcode symbol CD1 can be read by the scanner module 90.

The consumer confirming the screen SC1 holds the screen SC1 over the reading window 91 of the scanner module 90 provided in the cart C in use. If an image including the code symbol CD1 is captured by the imaging unit 92 of the scanner module 90 according to this operation, data of the code symbol CD1, that is, the cooperation ID is read by the reading unit 93. The data of the cooperation ID is wirelessly transmitted, by the action of the wireless unit 95, through the intra-store network NW4 together with the scanner ID stored in the storing unit 94.

Incidentally, if an image including a barcode is captured in the imaging unit 92, the scanner module 90 operates in the same manner. That is, data of the barcode is wirelessly transmitted through the intra-store network NW4 together with the scanner ID. The data wirelessly transmitted from the scanner module 90 is received by the access point 70 and sent to the store server 30 through the intra-store network NW2.

If the data transmitted from the scanner module 90 is received via the communication interface 34, the processor 31 of the store server 30 starts the information processing procedure illustrated in the flowchart of FIG. 18. That is, in ACT 301, the processor 31 analyzes the received data. In ACT 302, the processor 31 checks whether the received data includes a cooperation ID. In this case, since the received data includes the cooperation ID, the processor 31 determines YES in ACT 302 and proceeds to ACT 303.

In ACT 303, the processor 31 acquires a scanner ID from the received data. In the following explanation, the scanner ID can be referred to as an acquired scanner ID. The processor 31 checks an in-operation flag present in the same row as the acquired scanner ID in the scanner management table 36. An initial state of the in-operation flag is represented as "0".

If confirming that the in-operation flag is not set to "1", that is, is set to "0", the processor 31 determines NO in ACT 304 and proceeds to ACT 305. In ACT 305, the processor 31 controls the communication interface 34 to transmit a cooperation notification command to the cooperation server 10. According to this control, the cooperation notification command is transmitted from the communication interface 34. The cooperation notification command is received by the router 80 via the intra-store network NW2 and further received by the cooperation server 10 via the communication network NW3. The cooperation notification command includes a cooperation ID and a scanner ID. The cooperation ID and the scanner ID are the cooperation ID and the scanner ID included in the data received from the scanner module 90.

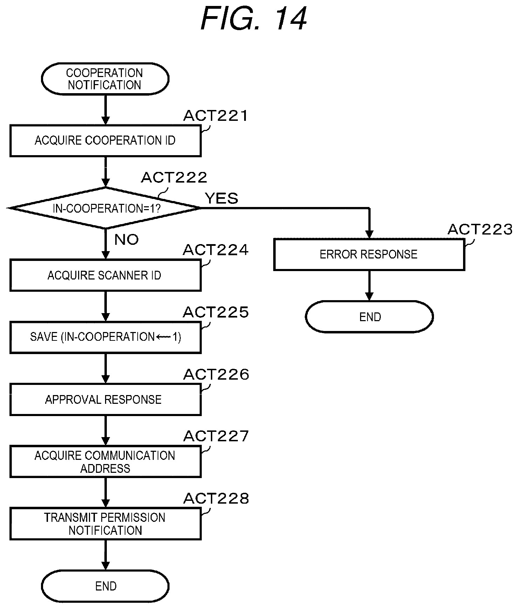

The processor 11 of the cooperation server 10, which receives the cooperation notification command via the second communication interface 15, starts the information processing procedure illustrated in the flowchart of FIG. 14. That is, in ACT 221, the processor 11 acquires a cooperation ID from the cooperation notification command. In the following explanation, the cooperation ID is referred to as acquired cooperation ID. In ACT 222, the processor 11 searches through the terminal cooperation table 17 and checks whether the in-cooperation flag in the same row as the acquired cooperation ID is set to "1".

If the in-cooperation flag is set to "1", the processor 11 determines YES in ACT 222 and proceeds to ACT 223. In ACT 223, the processor 11 controls the second communication interface 15 to transmit an error response command to the store server 30 at a cooperation notification command transmission source. According to this control, the error response command is transmitted from the second communication interface 15. The error response command is received by the router 80 via the communication network NW3 and further received by the store server 30 via the intra-store network NW2.

On the other hand, if the in-cooperation flag is set to "0", the processor 11 determines NO in ACT 222 and proceeds to ACT 224. In ACT 224, the processor 11 acquires a scanner ID from the cooperation notification command. In ACT 225, the processor 11 saves the scanner ID in the scanner ID field in the same row as the acquired cooperation ID of the terminal cooperation table 17. The processor 11 changes the in-cooperation flag present in the same row as the acquired cooperation ID from "0" to "1".

In ACT 226, the processor 11 controls the second communication interface 15 to transmit an approval response command to the store server 30 at the cooperation notification command transmission source. According to this control, the approval response command is transmitted from the second communication interface 15. The approval response command is received by the router 80 via the communication network NW3 and further received by the store server 30 via the intra-store network NW2.

In ACT 227, the processor 11 acquires a communication address from a field in the same row as the acquired cooperation ID in the terminal cooperation table 17. In ACT 228, the processor 11 controls the first communication interface 14 to transmit a permission notification command with the communication address set as a destination. According to this control, the permission notification command is wirelessly transmitted from the first communication interface 14. The permission notification command is received by the wireless device 24 of the information terminal 20, in which the destination communication address is set, via the wide area network NW1. The processor 11 of the cooperation server 10 ends this reception processing for the cooperation notification command.

Referring back to FIG. 18, in ACT 306, the processor 31 of the store server 30, which controls the transmission of the cooperation notification command, waits for a response command from the cooperation server 10. If the approval response command is received via the first communication interface 14, the processor 31 determines YES in ACT 306 and proceeds to ACT 307

In ACT 307, the processor 31 changes the in-operation flag present in the same row as the acquired scanner ID in the scanner management table 36 from "0" to "1". In ACT 308, the processor 31 acquires, from the virtual POS server 40, a virtual POS No. of a virtual POS application not being executed. In ACT 309, the processor 31 saves the virtual POS No. in the field in the same row as the acquired scanner ID in the scanner management table 36.

In ACT 310, the processor 31 controls the communication interface 34 to transmit a registration start notification command to the virtual POS server 40. According to this control, the registration start notification command is transmitted from the communication interface 34 to the virtual POS server 40. The registration start notification command is received by the virtual POS server 40 via the intra-store network NW2. The registration start notification command includes a virtual POS No. The virtual POS No. is the virtual POS No. acquired in the processing in ACT 308.

The processor 31 ends this scan data reception processing for the cooperation ID. If the in-operation flag is set to "1" in ACT 304 or if the error response command is received in ACT 306, the processor 31 determines that an error occurs in the reception processing and ends the reception processing.

If the registration start notification command is received via the communication interface 44, the processor 41 of the virtual POS server 40 starts the information processing procedure illustrated in the flowchart of FIG. 21. That is, in ACT 401, the processor 41 acquires a virtual POS No. from the registration start notification command. In ACT 402, the processor 41 initializes one transaction file 47. Specifically, the processor 41 describes the virtual POS No. acquired in ACT 401 in the virtual POS No. region of the transaction file 47. The processor 41 clears the purchase list region and the accounting code region of the transaction file 47. The processor 41 ends this reception processing for the registration start notification command.

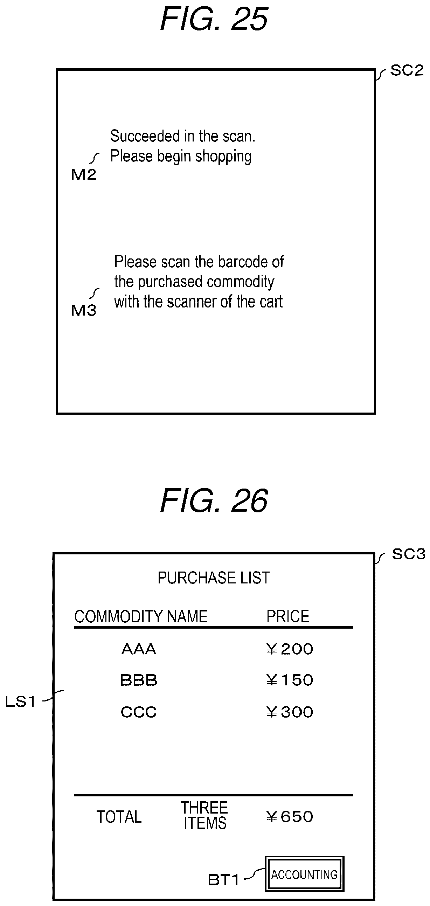

Referring back to FIG. 11, in ACT 107, the processor 21 of the information terminal 20, which causes the touch panel 25 to display the code symbol CD1 of the cooperation ID, waits for the permission notification command. If the permission notification command is received via the wireless device 24, the processor 21 determines YES in ACT 107 and proceeds to ACT 108. In ACT 108, the processor 21 causes the touch panel 25 to display a shopping start screen SC2 (see FIG. 25).

FIG. 25 is a display example of the shopping start screen SC2. As illustrated in FIG. 25, the shopping start screen SC2 includes a message M2 for informing the consumer that scanning of the code symbol CD1 indicating the cooperation ID is successful and the consumer may begin shopping and a message M3 for informing the user that, in the shopping, the user scans a barcode of a purchased commodity with the scanner module 90 of the cart C.

The consumer confirming the shopping start screen SC2 starts shopping after placing the information terminal 20 on the placing stand 200 of the cart C. The consumer holds a barcode of a purchased commodity over the reading window 91 of the scanner module 90 and then puts the purchased commodity in a shopping basket SB. According to this operation, as explained above, data of the barcode is transmitted to the store server 30 together with the scanner ID through the intra-store network NW4 and the intra-store network NW2.

If the data transmitted from the scanner module 90 is received via the communication interface 34, the processor 31 of the store server 30 starts the information processing procedure illustrated in the flowchart of FIG. 18. That is, in ACT 301, the processor 31 analyzes the received data. In ACT 302, the processor 31 checks whether the received data includes a cooperation ID. In this case, since the received data does not include a cooperation ID, the processor 31 determines NO in ACT 302 and proceeds to ACT 311.

In ACT 311, the processor 31 checks whether the received data includes a commodity ID. In this case, since the received data includes a commodity ID, the processor 31 determines YES in ACT 311 and proceeds to ACT 312.

In ACT 312, the processor 31 acquires a scanner ID from the received data. In the following explanation, the scanner ID can be referred to as an acquired scanner ID. In ACT 313, the processor 31 checks an in-operation flag present in the same row as the acquired scanner ID in the scanner management table 36.

If the in-operation flag is set to "1", the processor 31 determines YES in ACT 313 and proceeds to ACT 314. In ACT 314, the processor 31 acquires a virtual POS No. that is in the same row as the acquired scanner ID in the scanner management table 36. The processor 31 controls the first communication interface 14 to transmit a registration request command to the virtual POS server 40. According to this control, the registration request command is transmitted from the first communication interface 14 to the virtual POS server 40. The registration request command is received by the virtual POS server 40 via the intra-store network NW2. The registration request command includes a commodity ID and a virtual POS No. The commodity ID is the commodity ID included in the received data from the scanner module 90. The virtual POS No. is the virtual POS No. acquired in the processing in ACT 314.

If the registration request command is received via the communication interface 44, the processor 41 of the virtual POS server 40 starts the information processing procedure illustrated in the flowchart of FIG. 22. That is, in ACT 411, the processor 41 acquires a virtual POS No. from the registration request command. In ACT 412, the processor 41 acquires a commodity ID from the registration request command. In ACT 413, the processor 41 executes commodity registration processing. Specifically, the processor 41 reads out, from the commodity file 46, commodity data such as a unit price and a commodity name of the commodity specified by the commodity ID. The processor 41 generates a purchased commodity record including the commodity ID, the commodity name, and the price. The processor 41 adds the purchased commodity record to the purchase list of the transaction file 47 in which the virtual POS No. is set.

If ending the commodity registration processing in this way, in ACT 414, the processor 41 controls the communication interface 44 to transmit a registration response command to the store server 30. According to this control, the registration response command is transmitted from the communication interface 44 to the store server 30. The registration response command is received by the store server 30 via the intra-store network NW2. The registration response command includes data of the transaction file 47 to which the purchased commodity record is added in ACT 413.

Referring back to FIG. 18, in ACT 316, the processor 31 of the store server 30, which controls the transmission of the registration request command, waits for the registration response command. If the registration response command is received via the communication interface 34, the processor 31 determines YES in ACT 316 and proceeds to ACT 317. In ACT 317, the processor 31 acquires a purchase list from data of the transaction file 47 included in the registration response command. In ACT 318, the processor 31 controls the communication interface 34 to transmit a registration notification command to the cooperation server 10. According to this control, the registration notification command is transmitted from the communication interface 34 to the cooperation server 10. The registration notification command is received by the cooperation server 10 via the communication network NW3. The registration notification command includes a scanner ID and a purchase list. The scanner ID is the scanner ID acquired in the processing in ACT 312. The purchase list is the purchase list acquired in the processing in ACT 317.

The processor 31 ends this scan data reception processing for the commodity ID. If the in-operation flag is set to "0" in ACT 313, the processor 31 determines that an error occurs in the reception processing and ends the reception processing.

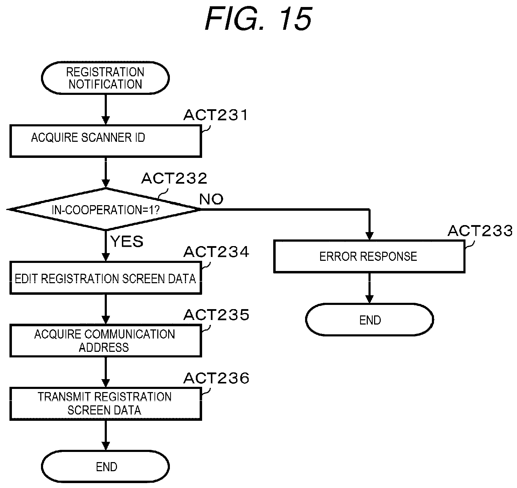

If the registration notification command is received via the second communication interface 15, the processor 11 of the cooperation server 10 starts the information processing procedure illustrated in the flowchart of FIG. 15. That is, in ACT 231, the processor 11 acquires a scanner ID from the registration notification command. In the following explanation, the scanner ID is referred to as acquired scanner ID. In ACT 232, the processor 11 checks an in-cooperation flag present in the same row as the acquired scanner ID in the terminal cooperation table 17.

If the in-cooperation flag is set to "0", the processor 11 determines NO in ACT 232 and proceeds to ACT 233. In ACT 233, the processor 11 controls the second communication interface 15 to transmit the error response command to the store server 30 at a registration notification command transmission source. According to this control, the error response command is transmitted from the second communication interface 15. The error response command is received by the router 80 via the communication network NW3 and further received by the store server 30 via the intra-store network NW2.

On the other hand, if the in-cooperation flag is set to "1", the processor 11 determines YES in ACT 232 and proceeds to ACT 234. In ACT 234, the processor 11 edits registration screen data based on data of a shopping list included in the registration notification command. In ACT 235, the processor 11 acquires a communication address from the same row as the acquired scanner ID from the terminal cooperation table 17. In ACT 236, the processor 11 controls the first communication interface 14 to transmit the registration screen data with the communication address set as a destination. According to this control, the registration screen data is transmitted from the first communication interface 14. The registration screen data is received in the information terminal 20, in which the communication address is set as the destination, via the wide area network NW1.

Referring back to FIG. 11, in ACT 109, the processor 21 of the information terminal 20, which displays the shopping start screen SC2, waits for registration screen data. If the registration screen data is received via the wireless device 24, the processor 21 determines YES in ACT 109 and proceeds to ACT 110. In ACT 110, the processor 21 causes the touch panel 25 to display a registration screen SC3 (see FIG. 26) based on the registration screen data.

FIG. 26 is a display example of the registration screen SC3. As illustrated, an accounting button BT1 is displayed on the registration screen SC3 together with a purchase list LS1. In the purchase list LS1, a list of a commodity name and a price of a commodity, sales of which is registered, a total number of items, a total amount, and the like are displayed. The accounting button BT1 is a button image that the consumer finishing shopping touches in order to instruct accounting.

In ACT 111, the processor 21 of the information terminal 20, which displays the registration screen SC1, checks whether the accounting button BT1 is selected. If the accounting button BT1 is not selected, the processor 21 determines NO in ACT 111 and proceeds to ACT 112. In ACT 112, the processor 21 checks whether the next registration screen data has been received. If the next registration screen data is not received, the processor 21 determines NO in ACT 112 and returns to ACT 111. In ACT 11 and ACT 112, the processor 21 waits for the accounting button BT1 to be selected or waits for the next registration screen data to be received.

If the next registration screen data is received in this waiting state, the processor 21 determines YES in ACT 112 and proceeds to ACT 110. That is, the processor 21 updates, based on the registration screen data, the registration screen SC3 displayed on the touch panel 25. The processor 21 returns to the waiting state in ACT 111 and ACT 112.

If detecting during this waiting state that the accounting button BT1 is selected, the processor 21 determines YES in ACT 111 and proceeds to ACT 121 in FIG. 12. In ACT 121, the processor 21 acquires a cooperation ID stored in the main memory 22 or the auxiliary storage device 23. In ACT 122, the processor 21 controls the wireless device 24 to transmit an accounting instruction command to the cooperation server 10. According to this control, the accounting instruction command is wirelessly transmitted from the wireless device 24. The accounting instruction command is received by the correlation server 10 via the wide area network NW1. The accounting instruction command includes a communication address of the information terminal 20 and the cooperation ID acquired in ACT 121.

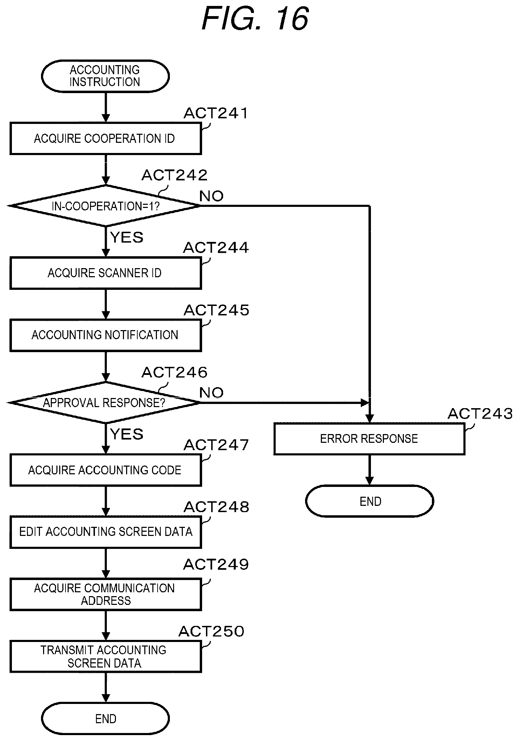

If the accounting instruction command is received via the first communication interface 14, the processor 11 of the cooperation server 10 starts the information processing procedure illustrated in the flowchart of FIG. 16. That is, in ACT 241, the processor 11 acquires a cooperation ID from the accounting instruction command. In the following explanation, the cooperation ID is referred to as acquired cooperation ID. The processor 11 checks an in-cooperation flag present in the same row as the acquired cooperation ID in the terminal cooperation table 17.

If the in-cooperation flag is not set to "1", the processor 11 determines NO in ACT 242 and proceeds to ACT 243. In ACT 243, the processor 11 controls the first communication interface 14 to transmit the error response command to the information terminal 20 at an accounting instruction command transmission source. According to this control, the error response command is transmitted from the first communication interface 14. The error response command is received by the information terminal 20 at the accounting instruction command transmission source via the wide area network NW1.

On the other hand, if the in-cooperation flag is set to "1", the processor 11 determines YES in ACT 242 and proceeds to ACT 244. In ACT 244, the processor 11 acquires a scanner ID from the same row as the acquired cooperation ID in the terminal cooperation table 17. In ACT 245, the processor 11 controls the second communication interface 15 to transmit an accounting notification command to the store server 30. According to this control, the accounting notification command is transmitted from the second communication interface 15 to the store server 30. The accounting notification command is received by the router 80 via the communication network NW3 and further received by the store server 30 via the intra-store network NW2. The accounting notification command includes a scanner ID. The scanner ID is the scanner ID acquired in the processing in ACT 244.

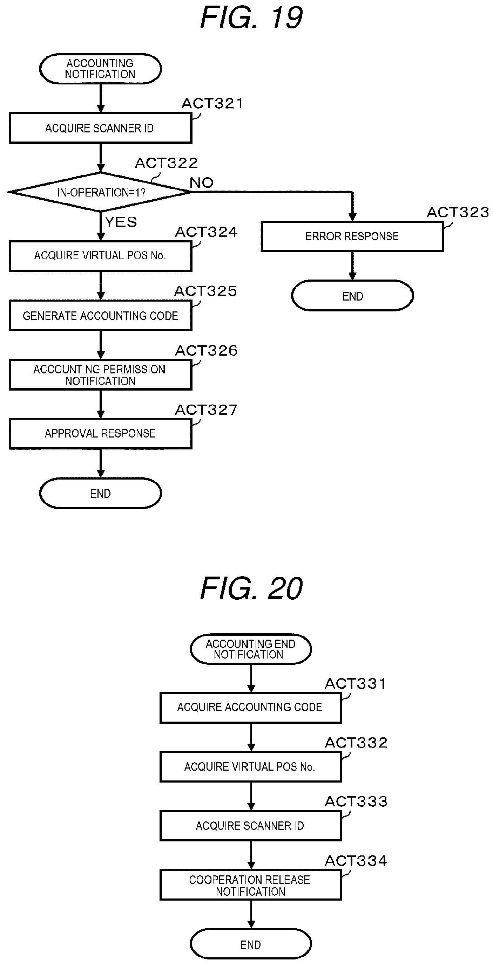

If the accounting notification command is received, the processor 31 of the store server 30 starts procedure illustrated in the flowchart of FIG. 19. That is, in ACT 321, the processor 31 acquires a scanner ID from the accounting notification command. In the following explanation, the scanner ID is referred to as acquired scanner ID. In ACT 322, the processor 31 checks an in-operation flag in the same row as the acquired scanner ID in the scanner management table 36.

If the in-operation flag is set to "0", the processor 31 determines NO in ACT 322 and proceeds to ACT 323. In ACT 323, the processor 31 controls the communication interface 34 to transmit the error response command to the cooperation server 10 at an accounting notification command transmission source. According to this control, the error response command is transmitted from the communication interface 34 to the cooperation server 10. The error response command is received by the router 80 via the intra-store network NW2 and further received by the cooperation server 10 via the communication network NW3.

On the other hand, if the in-operation flag is set to "1", the processor 31 determines YES in ACT 322 and proceeds to ACT 324. In ACT 324, the processor 31 acquires a virtual POS No. from a field in the same row as the acquired scanner ID in the scanner management table 36. In ACT 325, the processor 31 generates a new accounting code.

In ACT 326, the processor 31 controls the first communication interface 14 to transmit an accounting permission notification command to the virtual POS server 40. According to this control, the accounting permission notification command is transmitted from the first communication interface 14 to the virtual POS server 40. The accounting permission notification command is received by the virtual POS server 40 via the intra-store network NW2. The accounting permission notification command includes a virtual POS No. and an accounting code. The virtual POS No. is the virtual POS No. acquired in the processing in ACT 324. The accounting code is the accounting code generated in the processing in ACT 325.

If the accounting permission notification command is received, the processor 41 of the virtual POS server 40 starts the information processing procedure illustrated in the flowchart of FIG. 23. That is, in ACT 421, the processor 41 acquires a virtual POS No. from the accounting permission notification command. In ACT 422, the processor 41 acquires an accounting code from the accounting permission notification command. In ACT 423, the processor 41 saves the accounting code in the transaction file 47 in which the virtual POS No. is set.

Referring back to FIG. 19, in ACT 327, the processor 31 of the store server 30, which controls the transmission of the accounting permission notification command, controls the communication interface 34 to transmit an approval response command to the cooperation server 10. According to this control, the approval response command is transmitted from the communication interface 34 to the cooperation server 10. The approval response command is received via the intra-store network NW2 and further received by the cooperation server 10 via the communication network NW3. The approval response command includes an accounting code. The accounting code is the accounting code generated in the processing in ACT 325.

Referring back to FIG. 16, in ACT 246, the processor 11 of the cooperation server 10, which controls the transmission of the accounting notification command, checks whether the approval response command has been received. If the error response command is received rather than the approval response command, the processor 11 determines NO in ACT 246 and proceeds to the processing in ACT 243.

If the approval response command is received, the processor 11 determines YES in ACT 246 and proceeds to ACT 247. In ACT 247, the processor 11 acquires an accounting code from the approval response command. In ACT 248, the processor 11 edits accounting screen data including the accounting code.

In ACT 249, the processor 11 acquires a communication address from a field in the same row as the acquired scanner ID in the terminal cooperation table 17. The processor 11 controls the first communication interface 14 to transmit accounting screen data to the information terminal 20 in which the communication address is set. According to this control, the accounting screen data is transmitted from the first communication interface 14. The accounting screen data is received, via the wide area network NW1, by the information terminal 20 in which the communication address is set.

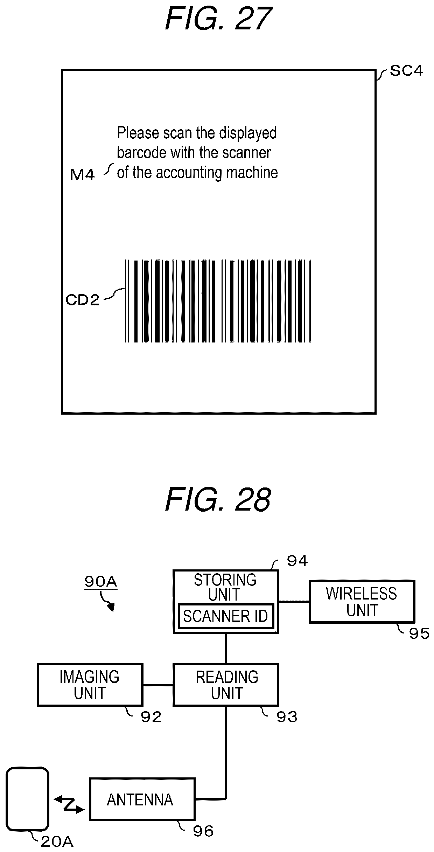

Referring back to FIG. 12, in ACT 123, the processor 21 of the information terminal 20, which controls the transmission of the accounting instruction command, waits for accounting screen data. If the accounting screen data is received via the wireless device 24, the processor 21 determines YES in ACT 123 and proceeds to ACT 124. In ACT 124, the processor 21 causes the touch panel 25 to display an accounting screen SC4 (see FIG. 27).

FIG. 27 is a display example of the accounting screen SC4. As illustrated in FIG. 27, on the accounting screen SC4, a barcode CD2 or an accounting code is displayed. A message M4 for instructing to scan the barcode CD2 with a scanner of an accounting machine is displayed on the accounting screen SC4.

The consumer confirming the accounting screen SC4 moves to a setting place of the self-service accounting machine 50 or the manned accounting machine 60. For example, the consumer moving to the setting place of the self-service accounting machine 50 causes a scanner of the self-service accounting machine 50 to read a barcode BC2 of the accounting screen SC4. Then, the transaction file 47, in which an accounting code of the barcode BC2 is set, is transmitted to the self-service accounting machine 50 from the virtual POS server 40. Thereafter, a well-known payment process such as cash payment, credit card payment, or electronic money payment is executed in the self-service accounting machine 50. If the payment process ends, the self-service accounting machine 50 transmits an accounting end notification command to the store server 30. The accounting end notification command includes the accounting code of the barcode BC2.

For example, the consumer moving to the setting place of the manned accounting machine 60 shows the accounting screen SC4 to a store clerk. The store clerk causes the scanner of the manned accounting machine 60 to read the barcode BC2 of the accounting screen SC4. Then, the transaction file 47, in which the accounting code of the barcode BC2 is set, is transmitted to the manned accounting machine 60 from the virtual POS server 40. Thereafter, a well-known payment process such as cash payment, credit card payment, or electronic money payment is executed in the manned accounting machine 60. Correction and the like of registered commodities are performed according to necessity. If the payment process ends, the manned accounting machine 60 transmits the accounting end notification command to the store server 30. The accounting end notification command includes the accounting code of the barcode BC2.

If the accounting end notification command is received, the processor 31 of the store server 30 starts the information processing procedure illustrated in the flowchart of FIG. 20. That is, in ACT 331, the processor 31 acquires an accounting code from the accounting end notification command. In ACT 332, the processor 31 inquires the virtual POS server 40 and acquires a virtual POS No. stored in the transaction file 47 together with the accounting code. In the following explanation, the virtual POS No. is referred to as acquired virtual POS No.

In ACT 333, the processor 31 acquires a scanner ID from a field in the same row as the acquired virtual POS No. in the scanner management table 36. The processor 31 controls the first communication interface 14 to transmit a cooperation release notification command to the cooperation server 10. Consequently, the cooperation release notification command is transmitted from the first communication interface 14 to the cooperation server 10. The cooperation release notification command is received by the router 80 via the intra-store network NW2 and further received by the cooperation server 10 via the communication network NW3. The cooperation release notification command includes a scanner ID. The scanner ID is the scanner ID acquired in the processing in ACT 333.

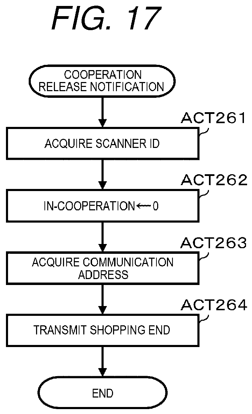

If the cooperation release notification command is received, the processor 11 of the cooperation server 10 starts the information processing procedure illustrated in the flowchart of FIG. 17. That is, in ACT 261, the processor 11 acquires a scanner ID from the cooperation release notification command. In the following explanation, the scanner ID is referred to as an acquired scanner ID. The processor 11 changes an in-cooperation flag present in the same row as the acquired scanner ID of the terminal cooperation table 17 from "1" to "0".

In ACT 263, the processor 11 acquires a communication address from a field in the same row as the acquired scanner ID in the terminal cooperation table 17. In ACT 264, the processor 11 controls the first communication interface 14 to transmit a shopping end command with the communication address set as a destination. According to this control, the shopping end command is transmitted from the first communication interface 14. The shopping end command is received by the information terminal 20, in which the communication address is set as the destination, via the wide area network NW1.

Referring back to FIG. 12, in ACT 125, the processor 21 of the information terminal 20 displaying the accounting screen SC4 waits for an accounting end command. If the accounting end command is received via the wireless device 24, the processor 21 determines YES in ACT 125 and proceeds to ACT 126. In ACT 126, the processor 21 erases the accounting screen SC4 displayed on the touch panel 25. The processor 21 clears the cooperation ID stored in the main memory 22 or the auxiliary storage device 23. The processor 21 ends the information processing conforming to the shopping supporting program.

The commodity sales processing system in this embodiment includes the cooperation server 10 functioning as a first server and the store server 30 and the virtual POS server 40 together functioning as a second server. The cooperation server 10 performs data communication with the information terminal 20 via the wide area network NW1, which is also referred to as a first network in some contexts. The store server 30 and the virtual POS server 40 performs data communication with the code reading apparatus owned by the store, that is, the scanner module 90 via the intra-store network NW2 and the intra-store network NW4, which are collectively referred to as a second network in some contexts.

The processor 11 of the cooperation server 10 executes the processing in ACT 221 to ACT 225 in FIG. 14 to thereby function as a correlating unit. That is, the processor 11 correlates a cooperation ID, which is also referred to as a first unique code, set for the information terminal 20 before the consumer begins shopping in the store and a scanner ID, which is a second peculiar code, set for the scanner module 90. Specifically, the processor 11 correlates the cooperation ID and the scanner ID based on data transmitted to the store server 30 from the scanner module 90 that reads the code symbol CD1 of the cooperation ID displayed on the display device (the touch panel 25) of the information terminal 20.

The processor 31 of the store server 30 and the processor 41 of the virtual POS server 40 together execute the processing in ACT 311 to ACT 315 in FIG. 18 and the processing in ACT 411 to ACT 414 in FIG. 22 to thereby function as a processing unit. That is, the processor 31 and the processor 41 together process sales data of a commodity identified by the commodity code that has been read by the scanner module 90.

The processor 31 of the store server 30 and the processor 11 of the cooperation server 10 execute the processing in ACT 316 to ACT 318 in FIG. 18 and the processing in ACT 231 to ACT 236 (excluding ACT 233) in FIG. 15 to thereby function as a transmitting unit. That is, the processor 31 and the processor 11 transmit image data based on the sales data of the commodity processed by the processing unit to the information terminal 20 having a cooperation ID correlated with the scanner ID of the scanner module 90 that reads the commodity code.

The processor 31 of the store server 30 and the processor 11 of the cooperation server 10 execute the processing in ACT 331 to ACT 334 in FIG. 20 and the processing in ACT 261 to ACT 264 in FIG. 17 to thereby function as a releasing unit. That is, the processor 31 and the processor 11 release the correlation of the cooperation ID and the scanner ID according to settlement of a transaction based on the sales data of the commodity processed by the processing unit.

With the commodity sales processing system having such a configuration, the consumer reads a barcode with the scanner module 90 provided in the cart C. The scanner module 90 is specifically designed to read a barcode of a commodity. Therefore, reading accuracy and speed can be high. Additionally, the consumer can hold a large commodity with both the hands and use the scanner module 90 to read a barcode.

On the other hand, a registration screen showing a commodity registration result is displayed on the touch panel 25 of the information terminal 20 owned by the consumer. In recent years, Internet shopping using the information terminal 20 such as a smartphone has been widely adopted. The information terminal 20 is thus considered suitable as a user interface by most consumers. In this embodiment, the information terminal 20 is used as a user interface for aspects other than barcode reading operations of a commodity. Therefore, the information terminal 20 is user-friendly for the consumer. Moreover, from the viewpoint of the store, since it is unnecessary to provide a display device in the cart C, there is an advantage that initial capital investment can be reduced.

According to this embodiment, since the consumer's own information terminal 20 is used, the check-in operation necessary at store entry time with a cart terminal system can be omitted.

The information terminal 20 performs communication with the cooperation server 10 via the wide area network NW1. Therefore, the information terminal 20 owned by the consumer is not directly connected to the intra-store network NW2 and the intra-store network NW4. Therefore, since the consumer cannot illegally access the store server 30 or the like, security can be improved.

### [Second Embodiment]

A second embodiment is explained with reference to FIG. 28.

FIG. 28 is a block diagram of a scanner module 90A in the second embodiment. Portions common to the scanner module 90 in the first embodiment are denoted by the same reference numerals and signs.

As illustrated in FIG. 28, the scanner module 90A includes an antenna 96 for short range wireless communication in addition to the imaging unit 92, the reading unit 93, the storing unit 94, and the wireless unit 95. The antenna 96 is provided, for example, on the placing stand 200 of the cart C. That is, if an information terminal 20A adapted to the short range wireless communication is placed on the placing stand 200, the information terminal 20A and the antenna 96 perform the short range wireless communication. In the second embodiment, data of a cooperation ID stored in the information terminal 20A is transmitted to the scanner module 90A by the short range wireless communication. The scanner module 90A transmits data of a cooperation ID read by the reading unit 93 from a radio wave received by the antenna 96 to the store server 30 together with a scanner ID. The following operation is the same as the operation in the first embodiment.

In the second embodiment having such a configuration, the same action and effects as the action and effects in the first embodiment can be achieved. Moreover, a consumer only has to place the information terminal 20 on the placing stand 200. The consumer does not need to hold the code symbol CD1 of the cooperation ID displayed on the touch panel 25 over the reading window 91 of the scanner module 90. Accordingly, operability is more satisfactory.

### [Third Embodiment]

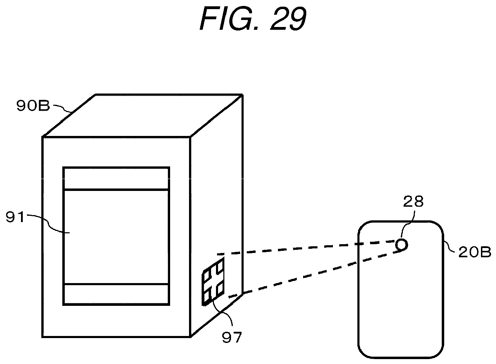

A third embodiment is explained with reference to FIGS. 29 to 31.

FIG. 29 is a schematic explanatory diagram of the third embodiment. As illustrated in FIG. 29, in the third embodiment, a sticker 97 of a two-dimensional code is stuck to one surface of a scanner module 90B attached to the cart C. The sticker 97 represents, with the two-dimensional code, a scanner ID allocated to the scanner module 90B. In the third embodiment, before beginning shopping, a consumer images the sticker 97 with a camera 28 included in an information terminal 20B.

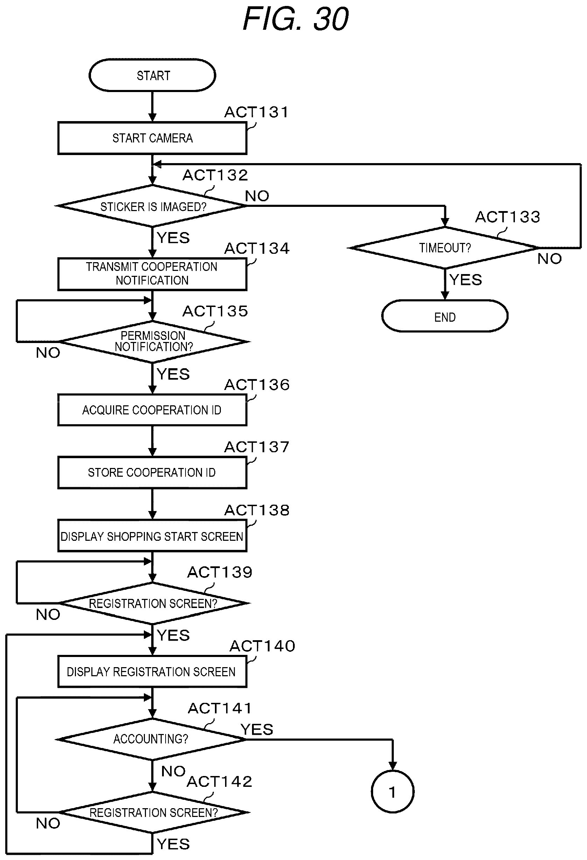

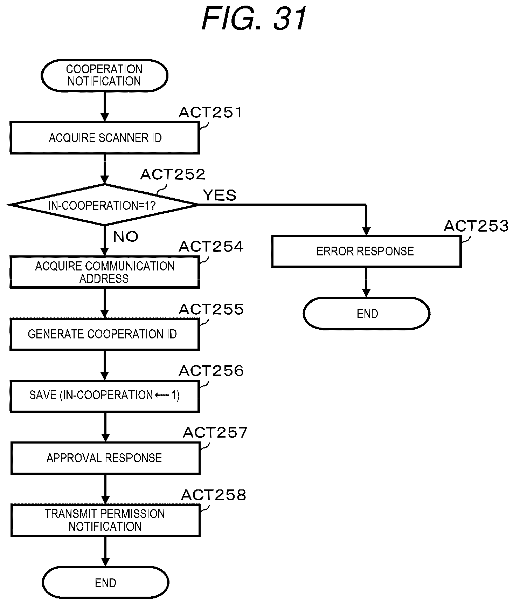

FIG. 30 is a flowchart illustrating information processing executed by the processor 21 of the information terminal 20B and is generally equivalent to the processing procedure in FIG. 11 explained in the first embodiment. FIG. 31 is a flowchart illustrating a procedure of cooperation notification command reception processing executed by the processor 11 of the cooperation server 10 and is generally equivalent to the processing procedure in FIG. 14 explained in the first embodiment.

In ACT 131, the processor 21 of the information terminal 20B starts the camera 28. In ACT 132, the processor 21 checks whether the sticker 97 is imaged by the camera 28. If the sticker 97 is not imaged, the processor 21 determines NO in ACT 132 and proceeds to ACT 133. In ACT 133, the processor 21 confirms whether an elapsed time from when the camera 28 is started exceeds a preset timeout time. The timeout time is, for example, 10 seconds. If the elapsed time does not yet exceed the timeout time, the processor 21 determines NO in ACT 133 and returns to ACT 132. In ACT 132 and ACT 133, the processor 21 waits for the sticker 97 to be imaged or waits for the timeout time to elapse. In this waiting state, if the timeout time elapses, the processor 21 determines YES in ACT 133 and ends the processing.

If the sticker 97 is imaged by the camera 28 before the timeout time elapses, the processor 21 determines YES in ACT 132 and proceeds to ACT 134. In ACT 134, the processor 21 controls the wireless device 24 to transmit a cooperation notification command to the cooperation server 10. According to this control, the cooperation notification command is wirelessly transmitted from the wireless device 24. The cooperation notification command is received by the cooperation server 10 via the wide area network NW1. The cooperation notification command includes a communication address, for example, an IP address of the information terminal 20. The cooperation notification command also includes a scanner ID read from an image of the sticker 97.

The processor 11 of the cooperation server 10, which receives the cooperation notification command via the second communication interface 15, starts the information processing procedure illustrated in the flowchart of FIG. 31. That is, in ACT 251, the processor 11 acquires a cooperation ID from the cooperation notification command. In the following explanation, the cooperation ID is referred to as an acquired cooperation ID. In ACT 252, the processor 11 searches through the terminal cooperation table 17 and checks whether an in-cooperation flag in the same row as the acquired cooperation ID is set to "1".

If the in-cooperation flag is set to "1", the processor 11 determines YES in ACT 252 and proceeds to ACT 253. In ACT 253, the processor 11 controls the first communication interface 14 to transmit an error response command to the information terminal 20B at a cooperation notification command transmission source. According to this control, the error response command is transmitted from the first communication interface 14. The error response command is received by the information terminal 20B via the wide area network NW1.

On the other hand, if the in-cooperation flag is set to "0", the processor 11 determines NO in ACT 252 and proceeds to ACT 254. In ACT 254, the processor 11 acquires a communication address of the information terminal 20 from the cooperation notification command. In ACT 255, the processor 11 generates a unique cooperation ID.

In ACT 256, the processor 11 saves the cooperation ID generated in ACT 255, the communication address acquired in ACT 254, and the scanner ID acquired in ACT 251 in the same row in the terminal cooperation table 17. The processor 11 sets an in-cooperation flag in the same row to "0".

In ACT 257, the processor 11 controls the second communication interface 15 to transmit an approval response command to the store server 30. According to this control, the approval response command is transmitted from the second communication interface 15. The approval response command is received by the router 80 via the communication network NW3 and further received by the store server 30 via the intra-store network NW2. The approval response command includes a scanner ID. The scanner ID is the scanner ID acquired in the processing in ACT 251.

The processor 31 of the store server 30 receiving the approval response command executes the processing in ACT 307 to ACT 310 in FIG. 18 explained in the first embodiment.

In ACT 258, the processor 11 controls the first communication interface 14 to transmit a permission notification command with the communication address acquired in the processing in ACT 254 set as a destination. According to this control, the permission notification command is wirelessly transmitted from the first communication interface 14. The permission notification command is received by the wireless device 24 of the information terminal 20B, in which the communication address is set as the destination, via the wide area network NW1. The permission notification command includes data of the cooperation ID generated in the processing in ACT 255. The processor 11 of the cooperation server 10 ends this reception processing for the cooperation notification command.

Referring back to FIG. 30, in ACT 135, the processor 21 of the information terminal 20B, which controls the transmission of the cooperation notification command, waits for the permission notification command. If the permission notification command is received via the wireless device 24, the processor 21 determines YES in ACT 135 and proceeds to ACT 136. In ACT 136, the processor 21 acquires the data of the cooperation ID from the permission notification command. In ACT 137, the processor 21 stores the data of the cooperation ID. A storage destination of the data may be the volatile memory region of the main memory 22 or may be the auxiliary storage device 23.

In ACT 138, the processor 21 causes the touch panel 25 to display the shopping start screen SC2. Thereafter, the processor 21 executes the processing in ACT 109 to ACT 112 in the first embodiment as ACT 139 to ACT 142 in the same manner.

In the third embodiment having such a configuration, the same action and effects as the action and effects in the first embodiment can be achieved. Moreover, according to the third embodiment, the consumer starting the shopping supporting program 27 of the information terminal 20 is capable of doing shopping simply by imaging the sticker 97 of the scanner module 90B with the camera 28. Therefore, it is possible to reduce a time until the consumer becomes capable of doing shopping compared with the first embodiment in which, after starting the shopping supporting program 27, the consumer operates the shopping start button and, waiting for the code symbol CD1 of the cooperation ID to be displayed on the touch panel 25, causes the scanner module 90 to read the code symbol CD1.

The embodiments of the commodity sales system that has satisfactory operability in registration of purchased commodities by a consumer himself or herself and can reduce equipment cost of a store is explained above. However, such embodiments are not limited to this.

For example, in the embodiments, the commodity sales processing system including the self-service accounting machine 50 and the manned accounting machine 60 is illustrated. For example, by performing code settlement using a smartphone, it is possible to omit the self-service accounting machine 50 and the manned accounting machine 60.

In the case illustrated in the embodiments, the cooperation ID is automatically generated in the cooperation server 10. For example, by directly using the communication address set in the information terminal 20 as the cooperation ID, it is possible to omit the generation processing for the cooperation ID.

In the embodiments, the dedicated server that executes the virtual POS application, that is, the virtual POS server 40 is provided in the store ST1. As another embodiment, a virtual POS server may be a cloud computing server. Consequently, a plurality of stores can share the virtual POS server.

The various screens SC1 to SC4 displayed on the touch panel 25 of the information terminal 20 are not limited to the illustrated screens and contents of messages displayed on the screens are not limited to the illustrated contents of the messages. In short, the screens SC1 to SC4 only have to be able to communicate information necessary for the consumer, who is an operator.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A commodity sales processing system, comprising:
a first server configured to connect to a customer information terminal via a first network; and
a second server configured to connect to a store code reading apparatus, wherein
the first server is configured to associate a first unique code for the customer information terminal with a second unique code for the store code reading apparatus;
the second server is configured to register a product in a sales transaction associated with the second unique code, the product being identified by a commodity code received by the second server from the store code reading apparatus via the second network; and
the first server is configured to transmit, via the first network, product information for the product registered in the sales transaction to the customer information terminal associated with the first unique code.

2. The commodity sales processing system according to claim 1, wherein the first server associates the first unique code and the second unique code based on correlating data transmitted, via the second network, to the second server from the store code reading apparatus.

3. The commodity sales processing system according to claim 2, wherein the correlating data is generated by the store code reading apparatus by reading the first unique code from a display screen of the customer information terminal.

4. The commodity sales processing system according to claim 1, wherein the first server associates the first unique code and the second unique code according to a wireless communication from the customer information terminal.

5. The commodity sales processing system according to claim 4, wherein the first server receives the second unique code in conjunction with the first unique code from the customer information terminal via the first network.

6. The commodity sales processing system according to claim 5, wherein the second unique code is provided to the customer information terminal by a code symbol representing the second unique code that is physically attached to the store code reading apparatus.

7. The commodity sales processing system according to any one of claims 1 to 6, wherein the first server is further configured to release the association of the first unique code and the second unique code according to settlement of the sales transaction associated with the second unique code.

8. The commodity sales processing system according to any one of claims 1 to 7, wherein the store code reading apparatus is mounted on a shopping cart.

9. The commodity sales processing system according to claim 8, wherein the shopping cart includes a stand for the customer information terminal.

10. A commodity sales processing method, comprising:
associating, in a first server, a first unique code for a customer information terminal with a second unique code for a store code reading apparatus;
registering, in a second server, a product in a sales transaction associated with the second unique code, the product being identified by a commodity code received by the second server from the store code reading apparatus via the second network; and
transmitting, via the first network, product information for the product registered in the sales transaction to the customer information terminal associated with the first unique code.

11. The method according to claim 10, wherein the customer information terminal and the store code reading apparatus is an optical scanner mounted on a shopping cart.

12. The method according to claim 10 or 11, wherein the first server associates the first unique code and the second unique code based on correlating data transmitted, via the second network, to the second server from the store code reading apparatus.

13. The method according to claim 10 or 11, wherein the first server receives the second unique code in conjunction with the first unique code from the customer information terminal via the first network.

14. The method according to claim 13, wherein the second unique code is provided to the customer information terminal by a code symbol representing the second unique code that is physically attached to the store code reading apparatus.

15. The method according to any one of claims 1 to 14, further comprising releasing the association of the first unique code and the second unique code in the first server according to settlement of the sales transaction associated with the second unique code.
